# EUROPÄISCHE PATENTSCHRIFT

(11) **EP 2 650 067 B1**
(45) Veröffentlichungstag und Bekanntmachung des Hinweises auf die Patenterteilung: **04.03.2015**
(21) Anmeldenummer: 13162889.3
(22) Anmeldetag: 09.04.2013
(51) Int. Cl.: B23B 31/30, B23B 31/117, B23B 31/20, B23B 31/02, B23B 31/00

(54) **Werkzeugaufnahme, insbesondere für ein Gewindeerzeugungswerkzeug**
Tool holder, particularly for a thread cutting tool
Porte-outil, en particulier pour un outil de filetage

(30) Priorität: 13.04.2012 DE 102012206069; 23.08.2012 DE 102012215039
(43) Veröffentlichungstag der Anmeldung: 16.10.2013
(73) Patentinhaber: Gühring OHG, 72458 Albstadt (DE)
(72) Erfinder: Teusch, Bruno, 73733 Esslingen (DE)
(74) Vertreter: Winter, Brandl, Fürniss, Hübner, Röss, Kaiser, Polte - Partnerschaft mbB

(56) Entgegenhaltungen:
- WO-A2-2004/103619
- DE-A1-102010 009 349
- DE-B3-102011 106 421
- US-A- 1 408 182

## Beschreibung

Die Erfindung betrifft eine Werkzeugaufnahme, insbesondere für ein Gewindeerzeugungswerkzeug, mit einem Grundkörper und einem mit dem Grundkörper zur Drehmomentübertragung verbundenen und im Grundkörper mit einer Federvorspannung axial beweglich verankerten Aufnahmekörper.

Das Hauptanwendungsgebiet derartiger Werkzeugaufnahmen, die auch unter der Bezeichnung Synchrofutter, Längenausgleichsfutter oder dergleichen bekannt sind, ist die Gewindeerzeugung, im Besonderen das Gewindebohren oder Gewindeformen. Durch die Synchronisation von Spindelvorschub und Drehzahl können moderne numerisch gesteuerte Werkzeugmaschinen Gewindebohrungen grundsätzlich ohne derartige Werkzeugaufnahmen herstellen (vgl. hierzu beispielsweise die DE 102010009349 A1). Es hat sich jedoch gezeigt, dass insbesondere bei der erforderlichen Drehrichtungsänderung bei Erreichen der maximalen Gewindetiefe dennoch Synchronisationsfehler auftreten können. Bei einer Werkzeugaufnahme ohne einen axialen Längenausgleich können diese Fehler zu axialen und radialen Belastungen mit Nachteilen hinsichtlich der Standzeit der Gewindeerzeugungswerkzeuge und der Gewindequalität führen.

Werkzeugaufnahmen mit Längenausgleich dienen zum Ausgleich von Synchronisationsfehlern zwischen Spindelvorschub und Steigung des herzustellenden Gewindes. Das eingespannte Gewindeerzeugungswerkzeug erfährt durch die Werkzeugaufnahme nur zu Anfang des Gewindeerzeugungsvorgangs eine axiale Kraft. Sobald das Gewinde angeschnitten ist, wird im Wesentlichen nur noch die Drehbewegung der Maschinenspindel auf das Gewindeerzeugungswerkzeug übertragen, da sich das Gewindeerzeugungswerkzeug durch das angeschnittene Gewinde dann selbsttätig in die Kernlochbohrung zieht. Der Spindelvorschub muss dann also nur noch so grob geregelt werden, dass die Werkzeugaufnahme ihre mögliche Längenausgleichsgrenze nicht erreicht.

Ein Beispiel für eine derartige Werkzeugaufnahme (Spannfutter) mit Längenausgleich ist in der DE 10147581 C1 gezeigt und beschrieben. Die Werkzeugaufnahme hat einen in eine Werkzeugmaschine einsetzbaren Kupplungsteil (Grundkörper) sowie einen gegenüber dem Kupplungsteil in axialer Richtung verschiebbar und federbeaufschlagt angeordneten Werkzeughalter (Aufnahmekörper). Der Werkzeughalter ist koaxial zu dem Kupplungsteil angeordnet und weist eine zentrale und damit ebenfalls koaxial zum Kupplungsteil verlaufende Passbohrung auf, die auf der dem Kupplungsteil abgewandten Seite zum Einstecken eines nicht näher dargestellten Schaftes eines auswechselbaren Werkzeuges, beispielsweise eines Bohrers oder Fräsers, offen ist. Der dem Kupplungsteil zugewandte Endbereich des Werkzeughalters ist in einer zentralen Bohrung des Kupplungsteils angeordnet. In dieser Bohrung ist der Werkzeughalter gegenüber dem Kupplungsteil in axialer Richtung sowohl zum Kupplungsteil hin als auch vom Kupplungsteil weg verschiebbar angeordnet. Die zentrale Bohrung ist in axialer Richtung stufenförmig ausgebildet und weist einen Außenbereich und einen Innenbereich auf, wobei der Durchmesser des Außenbereichs etwas größer ist als der Durchmesser des Innenbereichs. Im Außenbereich ist als Passsitz für den zylinderförmigen Endbereich des Werkzeughalters eine Kugelbüchse eingesetzt. Die Kugelbüchse ist gegen ein Verdrehen in Umfangsrichtung durch ein Sicherungselement gesichert. Das Sicherungselement ist in das Kupplungsteil eingesetzt und erstreckt sich in radialer Richtung vom Außenumfang des Kupplungsteils her nach innen, durchsetzt die Kugelbüchse und greift in eine axial verlaufende Nut im Umfangsbereich eines Endbereichs des Werkzeughalters ein. Das Sicherungselement wirkt dadurch als ein Drehmomentmitnehmer zwischen dem Kupplungsteil und dem Werkzeughalter. In axialer Richtung betrachtet ist die Kugelbüchse zwischen einer radialen Stufe zwischen dem Außenbereich und Innenbereich der zentralen Bohrung und einem auf den werkzeugseitigen Endabschnitt des Kupplungsteils aufgeschraubten Schraubring angeordnet. Im Innenbereich der zentralen Bohrung sind zwei Druckfedern mit Druckwirkungen in axialer Richtung vorgesehen. Die eine Druckfeder stützt sich mit einem Ende an einer vom freien Ende des Werkzeughalters wegweisenden Stirnfläche des Passsitzes und mit dem anderen Ende an einer zum freien Ende des Werkzeughalters hinweisenden Seitenfläche eines sich von dem Endbereich radial nach außen erstreckenden Ringflanschansatzes ab. Die andere Druckfeder stützt sich mit einem Ende an der gegenüberliegenden Seitenfläche des Ringflanschansatzes und mit dem anderen Ende an einer sich radial erstreckenden Innenwandung der zentralen Bohrung ab. Beide Druckfedern sind gleich stark ausgelegt, so dass in einer Ruhestellung der Ringflanschansatz in axialer Richtung gesehen etwa in der Mitte des Innenbereichs angeordnet ist. Im Werkzeughalter ist weiterhin eine zentrisch angeordnete und durchgehende Kühlmittelbohrung für eine Innenkühlung mit beispielsweise Wasser oder Öl vorgesehen.

Eine funktional ähnlich aufgebaute Werkzeugaufnahme ist in der EP 1693134 A2 gezeigt und beschrieben. Die EP 1693134 A2 offenbart im Besonderen eine Werkzeugaufnahme in Form einer Spannzange zum Halten eines Gewindeschneidwerkzeugs, bestehend aus einem äußeren Körper (Grundkörper) mit einer axialen, werkzeugseitig offenen Bohrung, in der eine innere, einen axialen Längenausgleich ermöglichende Hülse (Aufnahmekörper) aufgenommen ist. Die einen Längenausgleich ermöglichende Hülse trägt außen einen Bund, der sich auf der einen Seite über ein elastisches Material auf einem Absatz der Bohrung des äußeren Körpers abstützt, so dass die Vorschubkraft einer den äußeren Körper antreibenden Spindel über den äußeren Körper und das elastische Material auf den Bund der Hülse übertragen werden kann. Auf der anderen Seite stützt sich der Bund der Hülse über eine Feder auf einem Schraubring ab, der in einen werkzeugseitig zugänglichen Innengewindeabschnitt der Bohrung des äußeren Körpers eingeschraubt ist. Die Feder erlaubt es, dass die in dem Schraubring und in der Bohrung des äußeren Körpers geführte Hülse sich axial aus dem äußeren Körper gegen die Rückstellkraft der Feder herausbewegen kann, bis eine radiale Schulter der Hülse gegen den Schraubring anschlägt. Die Übertragung des Drehmoments vom äußeren Körper auf die Hülse erfolgt über eine polygonale Flächenpaarung, konkret eine sechskantförmige Umfangsfläche, von dem äußeren Körper über den eingeklebten Schraubring auf die Hülse. Darüber hinaus ist eine die Spannzange axial durchsetzende, zentrische Kühlschmiermittelbohrung vorgesehen, über die ein in der Hülse aufgenommenes Gewindeschneidwerkzeug mit Kühlschmiermittel versorgt werden kann.

Die DE 2001007 A1 offenbart eine Werkzeugaufnahme in Form eines Gewindeschneid-Schnellwechselfutters mit einem Schaft (Grundkörper) und einem am Schaft axial beweglich angeordneten Futterkörper (Aufnahmekörper). Auf einem fest mit dem axial beweglichen Futterkörper verbundenen Federbolzen sind zwei vorgespannte Druckfedern hintereinander angebracht sind, welche sich mit ihren einander abgewandten Enden jeweils an einer Auflagefläche am Anfang und Ende des aus dem Futterkörper herausragenden Teiles des Federbolzens abstützen, wogegen die einander zugewandten Federenden sich einmal an einem mit dem Innern des Futterschaftes fest verbundenen Riegel, und zum andern an einem mit dem Federbolzen fest verbundenen zweiten Riegel ihre Stützflächen finden. Bei Druckbeanspruchung wird die untere Druckfeder durch die Auflagefläche des Futterkörpers am unteren Ende des Federbolzens gegen den mit dem Futterschaft verbundenen Riegel gedrückt, wogegen die vorgespannte obere Druckfeder In ihrer Lage zwischen der Auflagefläche am oberen Ende des Federbolzens und dem Riegel am Federbolzen keine Veränderung erfährt. Bei Zugbeanspruchung wird die obere Druckfeder durch die Auflagefläche am oberen Ende des Federbolzens gegen den mit dem Futterschaft verbundenen Riegel gedrückt, wogegen die vorgespannte untere Druckfeder in ihrer Lage zwischen der Auflagefläche am unteren Ende des Federbolzens und dem Riegel am Federbolzen keine Veränderung erfährt. Dadurch, dass der Riegel am Federbolzen gleichstark wie der Riegel im Futterschaft ist, werden die beiden Federenden bei Nichtbeanspruchung des Längenausgleichs gegen den Riegel im Futterschaft gepresst und drücken den Riegel am Federbolzen planparallel zum Riegel im Futterschaft. Auf diese Weise wird eine vollkommene Ausschaltung des Axialspiels gewährleistet. Durch Verwendung von zwei Druckfedern mit verschiedenen Längen oder verschiedenen Drahtdurchmessern kann der Druck für Druck- und Zugbeanspruchung unterschiedlich eingestellt werden.

Aus der EP 1090704 A1 oder EP 0887135 A1 ist eine Werkzeugaufnahme in Form eines Hydrodehnspannfutters bzw. Gewindeschneidfutters bekannt, bei zwischen einem Spannmittel, insbesondere einer Spannzange, (Aufnahmekörper) für einen Gewindebohrer und einem Futterschaft (Grundkörper) ein Aufnahmeteil angeordnet ist, das in Drehrichtung spielfrei im Futterschaft gehalten wird und in axialer Richtung in Zug- und Druckrichtung ein geringes, über Elastomerverbindungen abgefedertes, axiales Spiel aufweist. Die Drehmomentmitnahme zwischen dem Futterschaft und dem Aufnahmeteil soll spielfrei über Drehmomentmitnehmer in Form von Kopfschrauben erfolgen, die mit ihren radial über das Aufnahmeteil überstehenden Köpfen mit einem geringen axialen Spiel in Querbohrungen des Futterschaftes eingreifen, oder alternativ dazu über Mitnahmekugeln, die den Futterschaft in Drehrichtung spielfrei mit dem Aufnahmeteil verbinden. Zur Abfederung des geringen axialen Spiels sind entweder Elastomerverbindungen vorgesehen, die Bohrungen im Futterschaft und erweiterte Anschlusssackbohrungen des Aufnahmeteils ausfüllen, oder in das Aufnahmeteil spielfrei eingreifende, radial überstehende Stifte mit aufgesteckten, spielfrei in Bohrungen des Futterkörpers einragenden Elastomerringen. In letzterem Fall können die in Bohrungen des Futterkörpers sitzenden Elastomerringe quer zur Längsrichtungen des Futters geteilt aus zwei Hälften zusammengesetzt sein, die jeweils aus unterschiedlichen Materialien mit unterschiedlicher Federcharakteristik bestehen. Zusätzlich kann sich das Aufnahmeteil über einen Gummiring am Boden des Futterschaftes abstützen.

Die DE 19841537 A1 zeigt und beschreibt eine funktional ähnliche Werkzeugaufnahme wie die EP 1090704 A1 oder EP 0887135 A1.

Weiter zeigt und beschreibt die DE 4106468 A1 eine Werkzeugaufnahme in Form eines Werkzeughalters mit einem maschinenseitigen und einem werkzeugseitigen Halterteil, die drehfest und axial verschieblich miteinander verbunden sind, und mit einer zwischen den Halterteilen angeordneten Feder für einen Längenausgleich auf Druck. Die Feder weist zwei Federabschnitte unterschiedlicher Härte auf, die an einem gemeinsamen, axial verschieblichen Lagerstück angreifen, wobei der harte Federabschnitt auf den werkzeugseitigen Halterteil und der weiche Federabschnitt auf den maschinenseitigen Halterteil einwirkt. Zwischen dem maschinenseitigen Halterteil und dem Lagerstück ist eine druckkraftabhängig lösbare Sperreinrichtung angeordnet. Die Federabschnitte und das Lagerstück sind auf einem gemeinsamen axialen Bolzen angeordnet sind, der an einem der Halterteile befestigt ist und in eine Bohrung des anderen Halterteils eingreift. Mindestens der harte Federabschnitt besteht aus mindestens einem im Wesentlichen massiven Element aus elastischem Kunststoff.

Schließlich ist aus der DE 3829800 A1 eine Werkzeugaufnahme in Form eines Werkzeughalters bestehend aus zwei, über eine Mitnehmereinrichtung längsverschieblich und drehfest gekoppelten Halterteilen bekannt, zwischen denen eine Federeinrichtung angeordnet ist, die für einen Längenausgleich auf Zug und Druck sorgt. Die Federeinrichtung umfasst im Besonderen eine Druckfeder für den Längenausgleich auf Druck und eine weitere Druckfeder für den Längenausgleich auf Zug. Beide Druckfedern bestehen aus einem Paket von Elementen aus geschäumtem, gemischtzelligem Polyurethan-Elastomer. Die Druckfeder besteht konkret aus zwei Elementen, während die Druckfeder vier Elemente umfasst und entsprechend weicher ist. Die beiden Druckfedern sind von einem Gehäuse umschlossen, welches in den maschinenseitigen Halterteil eingeklebt ist und mit seinem Boden sowie einem verschraubten Deckel Anschläge für die beiden Druckfedern bildet. Die Elemente sind auf eine Stange aufgesteckt, die mit dem werkzeugseitigen Halterteil verschraubt ist und sich durch das Gehäuse hindurch erstreckt. Zwischen den beiden Federn ist auf der Stange des Weiteren ein scheibenförmiger Betätiger für die beiden Druckfedern angeordnet.

Den oben diskutierten Werkzeugaufnahmen ist gemeinsam, dass die Drehmomentübertragung zwischen dem werkzeugmaschinenseitig angetriebenen Grundkörper und dem Aufnahmekörper, an dem das anzutreibende Gewindeerzeugungswerkzeug gehalten ist, formschlüssig über radial wirkende Mitnehmer (wie Schraubbolzen, Kugeln, Spannschrauben, radiale Bolzen mit und ohne Rollen, oder dergleichen) oder über eine polygonale Umfangsflächenpaarung zwischen Grundkörper und Aufnahmekörper erfolgt. Insbesondere bei den radialen wirkenden Mitnehmern ist die Drehmomentübertragungskapazität bedingt durch den relativ engen Abstand der Stelle, an der der oder die Mitnehmer in den Grundkörper und Aufnahmekörper oder umgekehrt eingreift oder eingreifen, zur Drehachse und/oder bedingt durch die in Umfangsrichtung lokal eng begrenzte Eingriffstelle begrenzt. Diese radial wirkenden Mitnehmer bzw. Umfangsflächenformschlussverbindungen bewirken zudem in Torsions- oder Drehrichtung eine starre Verbindung zwischen Grundkörper und Aufnahmekörper. Des Weiteren sind diese Werkzeugaufnahmen so aufgebaut, dass sie zumindest im zusammengesetzten Zustand (mit oder ohne im Aufnahmekörper eingespanntem Gewindeerzeugungswerkzeug) grundsätzlich keinen Eingriff mehr zulassen oder für einen Eingriff ausgelegt sind, der eine Änderung oder Einstellung der Federkennlinie oder des Federwegs des Aufnahmekörpers relativ zum Grundkörper bewirkt. Die Federkennlinie bzw. der Federweg lassen sich bei den oben diskutierten Werkzeugaufnahmen nur durch Verwendung entsprechender Federeinrichtungen oder -elemente ändern oder einstellen.

Eine Werkzeugaufnahme gemäß dem Oberbegriff des Anspruchs 1 ist aus DE 102010009349 A1 bekannt.

Ausgehend von dem oben diskutierten Stand der Technik hat die Erfindung die Aufgabe, eine Werkzeugaufnahme, insbesondere für ein Gewindeerzeugungswerkzeug, zu schaffen, das sich durch einen konstruktiv einfach gehaltenen Aufbau auszeichnet, der eine einfache Einstellung einer Federvorspannung zwischen Grundkörper und Aufnahmekörper sowie eine verbesserte Drehmomentmitnahme zwischen Grundkörper und Aufnahmekörper ermöglicht.

Diese Aufgabe wird durch eine Werkzeugaufnahme mit den Merkmalen des Anspruchs 1 gelöst. Vorteilhafte Weiterbildungen sind Gegenstand abhängiger Ansprüche und/oder werden im Folgenden diskutiert.

Gegenstand der Erfindung ist eine Werkzeugaufnahme mit einem Grundkörper und einem mit dem Grundkörper zur Drehmomentübertragung (drehfest oder drehelastisch) verbundenen und im Grundkörper - für einen axialen Längenausgleich - mit einer Federvorspannung axial beweglich (axialelastisch) verankerten Aufnahmekörper. Grund- bzw. Aufnahmekörper sind auswechselbar miteinander verbunden. Hauptanwendungsgebiet der erfindungsgemäßen Werkzeugaufnahme ist die Gewindeerzeugung, im Besonderen durch Gewindebohren oder Gewindeformen. Die Verwendung der erfindungsgemäßen Werkzeugaufnahme ist aber nicht auf die Gewindeerzeugung beschränkt. Sie eignet sich grundsätzlich für Bohrungsbearbeitungen, bei denen ein axialer Längenausgleich sinnvoll oder nützlich sein kann, also z.B. auch für die Erzeugung von Bohrungen mit einem Spiralprofil oder für Reibbearbeitungen.

Die erfindungsgemäße Werkzeugaufnahme ist daher nicht auf bestimmte Ausführungsformen beschränkt. Eine erfindungsgemäße Werkzeugaufnahme kann als ein Hydraulik-Dehnspannfutter, Schrumpffutter oder Synchro-Gewindefutter oder als eine Spannzangenaufnahme oder Zylinderschaftaufnahme ausgeführt sein. Derartige Werkzeugaufnahmen sind an sich bekannt. Sie halten und spannen ein Werkzeug, beispielsweise ein Gewindeerzeugungswerkzeug, konzentrisch zur Drehachse. Eine erfindungsgemäße Werkzeugaufnahme kann des Weiteren als ein Schnellwechselfutter zur Aufnahme eines mit einem Werkzeug bestückten Schnellwechselhalters ausgelegt sein. Unabhängig von der konkreten Ausführung kann die erfindungsgemäße Werkzeugaufnahme Teil eines modularen Werkzeugsystems bilden, wie sie beispielsweise im Produktkatalog Nr. 40 der Anmelderin, Ausgabe 2006, in der Systemübersicht von Seite1358 bis 1362 gezeigt und beschrieben sind.

Im Weiteren Sinne kann eine erfindungsgemäße Werkzeugaufnahme aber auch als ein Stufenwerkzeug, z.B. Stufenfräser, -bohrer oder -reibahle, ausgebildet sein, die eine oder mehrere Wende- oder Wechselschneidplatten aufnimmt. In diesem Fall kann eine erfindungsgemäße Werkzeugaufnahme einen mit einer oder mehreren Schneidplatten bestückten Grundkörper aufweisen, der für die Bearbeitung eines größeren Bohrdurchmessers ausgelegt ist, und einen mit einer oder mehreren Schneidplatten bestückten Aufnahmekörper aufweisen, der für die Bearbeitung eines kleineren Bohrdurchmessers ausgelegt ist.

Der Grundkörper der erfindungsgemäßen Werkzeugaufnahme dient zur (unmittelbaren oder mittelbaren) Ankopplung der erfindungsgemäßen Werkzeugaufnahme an eine Werkzeugmaschinenspindel. Der Schaftabschnitt des Grundkörpers kann hierzu in der Art eines an sich bekannten HSK (Hohlschaftkegel)-, SK (Steilkegel)-, MK (Morsekegel)- oder Zylinder-Schafts ausgebildet sein. Der Schaftabschnitt hat eine werkzeugmaschinenseitig offene, vorzugsweise zentrische Ausnehmung, z.B. Bohrung. In axialer Richtung schließt sich an den Schaftabschnitt ein Hülsenabschnitt mit einer werkzeugseitig offenen, vorzugsweise zentrischen Führungsbohrung an. Die Führungsbohrung ist durch eine radiale Trennwand von der Ausnehmung im Schaftabschnitt getrennt und dient zur axialbeweglichen Aufnahme und Führung eines vorzugsweise zylindrischen Führungsabschnitts des Aufnahmekörpers.

Der Aufnahmekörper dient zur Aufnahme, zum Halten oder Spannen eines Werkzeugs. Dies kann unmittelbar, z.B. durch einen Dehnspann- oder Schrumpfmechanismus, oder mittelbar, z.B. über eine Spannzange oder einen Schnellwechselhalter, erfolgen. Der Aufnahmekörper weist hierzu auf der vom Führungsabschnitt abgewandten Seite einen entsprechend ausgebildeten Aufnahmeabschnitt auf. Bei dem von der Werkzeugaufnahme zu haltenden Werkzeug kann es sich aber auch, wie oben bereits erwähnt, um beispielsweise eine oder mehrere Wechsel- oder Wendeschneidplatten handeln. In diesem Fall weist der Aufnahmeabschnitt des Aufnahmekörpers einen oder mehrere passende Schneidplattensitze auf.

Erfindungsgemäß ist der Aufnahmekörper im Grundkörper über einen einen axialen Durchbruch, z.B. eine axiale Durchgangsbohrung, in der radialen Trennwand durchgreifenden Anker verankert, der zur Einstellung der Federvorspannung zwischen Grundkörper und Aufnahmekörper über die werkzeugmaschinenseitig offene Ausnehmung im Schaftabschnitt des Grundkörpers zugänglich und betätigbar ist. Im Unterschied zu dem eingangs diskutierten Stand der Technik zeichnet sich die erfindungsgemäße Werkzeugaufnahme daher bereits dadurch aus, dass die Federvorspannung zwischen Grundkörper und Aufnahmekörper durch eine Verstellung des Ankers auf die jeweiligen Einsatzbedingungen und Bedürfnisse abgestimmt individuell eingestellt werden kann. Die Einstellung ist einfach durchzuführen, weil der Anker über die werkzeugmaschinenseitig offene Ausnehmung im Schaftabschnitt des Grundkörpers zugänglich und betätigbar ist. Eine werksseitig vorgenommene Einstellung der Federvorspannung kann also nachträglich ohne weiteres korrigiert werden, ohne dass die Werkzeugaufnahme hierzu erst einmal zerlegt werden müsste. Die erfindungsgemäße Werkzeugaufnahme gestattet daher eine Korrektur der Federvorspannung in einem Zustand, in dem in der Werkzeugaufnahme bereits ein Werkzeug eingespannt ist. Die Federvorspannung, d.h. die Kraft-/Weg-Kennlinie bzw. der Federweg einer die Federvorspannung bewirkenden, zwischen Grundkörper und Aufnahmekörper angeordneten Federeinrichtung, lässt sich daher individuell einstellen.

In einer bevorzugten Ausführung der erfindungsgemäßen Werkzeugaufnahme weist der Anker einen den Führungsabschnitt verlängernden, den axialen Durchbruch in der radialen Trennwand durchgreifenden Ankerschaft und einen am Ankerschaft vorgesehenen, am Grundkörper abgestützten Ankerkopf auf. Der Anker kann dabei mittelbar, z.B. über ein an der radialen Trennwand anliegendes Federelement, oder unmittelbar im Grundkörper abgestützt sein. Aufgrund des Durchgriffs des Ankerschafts durch den axialen Durchbruch in der radialen Trennwand des Grundkörpers befindet sich der Ankerkopf stets in der werkzeugmaschinenseitig zugänglichen Ausnehmung im Schaftabschnitt des Grundkörpers. Hinsichtlich der Betätigbarkeit des Ankers zur Einstellung der Federvorspannung bietet die erfindungsgemäße Werkzeugaufnahme verschiedene, stets aber relativ einfach zu realisierende Möglichkeiten, die je nach den individuellen Bedürfnissen eine mehr kompaktere und robustere Lösung oder eine flexiblere Lösung, die dem Anwender mehrere Eingriffsmöglichkeiten zur Einstellung der Federvorspannung sowie der Verankerung des Aufnahmekörpers im Grundkörper bietet, zulassen.

Die Einstellung der Federvorspannung gelingt besonders einfach, wenn der Anker als solcher, d.h. mit Ankerschaft und Ankerkopf, relativ zum Aufnahmekörper an diesem axial verstellbar angeordnet ist. Der Ankerkopf kann dabei am Ankerschaft fest vorgesehen sein, beispielsweise mit dem Ankerschaft einstückig ausgebildet sein, oder aber relativ zum Ankerschaft an diesem axial verstellbar angeordnet sein.

Bei einer einstückigen Ausbildung kann der Anker beispielsweise von einer in eine axiale Gewindebohrung des Führungsabschnitts eingeschraubten Kopfschraube gebildet sein, wobei der in der Ausnehmung im Schaftabschnitt des Grundkörpers befindliche Schraubenkopf (Ankerkopf) einen Anschlag bildet, über den der Anker mittelbar oder unmittelbar im Grundkörper axial abgestützt ist. Der Schraubenkopf kann in der Art eines Sechskant- oder Vierkantkopfs mit an seinem werkzeugmaschinenseitigen Ende einer polygonalen Außenkontur oder in der Art eines Zylinderkopfs, Senkkopfs, Linsensenkkopfs, Rundkopfs, Halbrundkopfs, Haken- oder Hammerkopfs mit an seinem werkzeugmaschinenseitigen Ende einer werkzeugmaschinenseitig zugänglichen Eingriffsöffnung, z.B. Innensechskant, Schlitz oder Kreuzschlitz; für den Eingriff eines passenden Werkzeugschlüssels ausgebildet sein.

Alternativ dazu können der Ankerschaft und Ankerkopf separat ausgebildet sein. Der Ankerschaft kann beispielsweise von einem Gewindebolzen gebildet sein, der analog der vorstehend beschriebenen einstückigen Ausbildung des Ankers als Kopfschraube in eine axiale Gewindebohrung des Führungsabschnitts eingeschraubt ist. Der Gewindebolzen kann, muss aber nicht über seine gesamte Länge ein durchgehendes Außengewinde aufweisen. Analog zur oben beschriebenen Kopfschraube kann der Gewindebolzen an seiner werkzeugmaschinenseitigen Stirnseite für eine Verschraubung mit dem Aufnahmekörper eine werkzeugmaschinenseitig zugängliche Eingriffsöffnung für ein Betätigungswerkzeug, z.B. Innensechskant, Schlitz oder Kreuzschlitz, aufweisen. Der Ankerkopf kann von einer in eine axiale Gewindebohrung des Gewindebolzens eingeschraubten Kopfschraube oder einer auf einen Außengewindeabschnitt des Gewindebolzens aufgeschraubten Ankermutter gebildet sein. Die Ankermutter kann in der Art einer Schraubenmutter mit polygonaler Außenkontur (Sechskant, Vierkant, etc.) oder in der Art einer Nutmutter oder Kreuzlochmutter mit zylindrischer Außenkontur und werkzeugmaschinenseitig zugänglichen Nuten, Löchern oder dergleichen für den Eingriff eines Betätigungswerkzeugs ausgebildet sein.

Wenn der Ankerschaft in dem axialen Durchbruch der radialen Trennwand des Grundkörpers mit einer definierten engen Spielpassung aufgenommen ist, erhält der Aufnahmekörper durch den in der Führungsbohrung des Hülsenabschnitts aufgenommenen Führungsabschnitt sowie durch den in dem radialen Durchbruch aufgenommenen Ankerschaft eine axiale Führung. Der Ringspalt zwischen dem Außenumfang des Ankerschafts und dem Innenumfang des axialen Durchbruchs kann über eine geeignete Dichtung, z. B. O-Ring-Dichtung, fluiddicht abgedichtet sein.

Die lösbare Verbindung des Ankers mit dem Aufnahmekörper ermöglicht, wie oben angedeutet, eine flexible Anpassung der Werkzeugaufnahme an verschiedene Bedürfnisse durch Verwendung verschiedener Ankerlängen und -formen.

Als Alternative zu der oben beschriebenen Ausführung, bei der der Anker als solcher am Führungsabschnitt des Aufnahmekörpers axial verstellbar angeordnet ist, kann der Ankerschaft am Führungsabschnitt des Aufnahmekörpers einstückig angefügt oder befestigt sein. In diesem Fall ist der Ankerkopf relativ zum Ankerschaft an diesem axial verstellbar angeordnet. Wenn der Ankerschaft am Führungsabschnitt des Aufnahmekörpers einstückig angefügt oder befestigt ist, kann er in dem radialen Durchbruch mit einer definierten Spielpassung axialbeweglich aber drehfest, z.B. durch einen Formschluss, aufgenommen sein. Dadurch wird nicht nur eine zusätzliche axiale Führung des Aufnahmekörpers erreicht sondern auch eine Drehmomentmitnahme zwischen Grundkörper und Aufnahmekörper. Der Ringspalt zwischen dem Außenumfang des Ankerschafts und dem Innenumfang des axialen Durchbruchs kann über eine geeignete Dichtung, z.B. O-Ring-Dichtung, fluiddicht abgedichtet sein. Dabei kann der Ankerkopf von einer in eine axiale Gewindebohrung des Gewindebolzens eingeschraubten Kopfschraube oder einer auf einen Außengewindeabschnitt des Gewindebolzens aufgeschraubten Ankermutter gebildet sein. Die Ankermutter kann in der Art einer Schraubenmutter mit polygonaler Außenkontur (Sechskant, Vierkant, etc.) oder in der Art einer Nutmutter oder Kreuzlochmutter mit zylindrischer Außenkontur und werkzeugmaschinenseitig zugänglichen Nuten, Löchern oder dergleichen für den Eingriff eines Betätigungswerkzeugs ausgebildet sein.

Die einstückige Anfügung oder Befestigung des Ankerschafts an den Aufnahmekörper ermöglicht eine besonders kompakte und konstruktiv einfache Gestaltung des Aufnahmekörpers und gestattet eine Drehmomentübertragung zwischen Grundkörper und Aufnahmekörper.

Eine axiale Federvorspannung zwischen Grundkörper und Aufnahmekörper kann durch ein funktional zwischen Aufnahmekörper und radialer Trennwand angeordnetes Federelement oder ein funktional zwischen radialer Trennwand und Anker bzw. Ankerkopf realisiert sein. Dadurch wird ein Längenausgleich entweder hinsichtlich Druck- oder Zugbeanspruchung des Aufnahmekörpers bzw. eines in der Werkzeugaufnahme eingespannten Werkzeugs erhalten. Um einen Längenausgleich sowohl hinsichtlich Druck- wie auch hinsichtlich Zugbeanspruchung zu erhalten, wird die Federvorspannung zwischen Grundkörper und Aufnahmekörper vorzugsweise durch zwei axialelastische Federelemente bewirkt, die einerseits zwischen Aufnahmekörper und radialer Trennwand und andererseits zwischen radialer Trennwand und Anker bzw. Ankerkopf angeordnet sind. Das bzw. die Federelemente sind bevorzugt als Federpakete aus jeweils einem oder mehreren Federn gebildet.

Als Federn kommen bevorzugt Schraubenfedern, im Besonderen Druckschraubenfedern und/oder Tellerfedern, jeweils aus Metall- und/oder Polymermaterial, sowie Elastomerfedern (Gummifedern) sowie Kombinationen aus den verschiedenen Federtypen und Federmaterialien in Betracht. Grundsätzlich können durch eine geeignete Kombination von Federtypen und/oder Federmaterialien die dadurch erhaltenen Federvorspannungen optimal an die jeweiligen Bedürfnisse angepasst werden. Dabei können die beiden Federelemente im Aufbau, d.h. in der Zusammensetzung der Federtypen und Federmaterialien, übereinstimmen, d.h. dieselbe Federkennlinie haben, oder verschieden sein, d.h. verschiedene Federkennlinien haben.

Verschiedene Federkennlinien können insbesondere für die Gewindeerzeugung sinnvoll sein. Beispielsweise kann das zwischen der radialen Trennwand im Grundkörper und dem Aufnahmekörper angeordnete Federelement, das die axiale Vorschubkraft vom Grundkörper auf den Aufnahmekörper überträgt, härter ausgelegt sein als das zwischen der radialen Trennwand im Grundkörper und dem Anker bzw. Ankerkopf angeordnete Federelement. Durch ein Federelement mit einer hohen Härte zwischen dem Aufnahmekörper und der radialen Trennwand im Grundkörper kann erreicht werden, dass die auf den Grundkörper ausgeübte axiale Vorschubkraft der Werkzeugmaschinenspindel möglichst verzögerungsfrei auf den Aufnahmekörper übertragen wird, was bei der Gewindeerzeugung für den Gewindeanschnitt förderlich sein kann. Sobald das Gewinde angeschnitten ist, wird, wie eingangs erwähnt, im Wesentlichen nur noch die Drehbewegung der Maschinenspindel auf das Gewindeerzeugungswerkzeug übertragen, da sich das Gewindeerzeugungswerkzeug durch das angeschnittene Gewinde dann selbsttätig in die Kernlochbohrung zieht. Das zwischen der radialen Trennwand im Grundkörper und dem Anker bzw. Ankerkopf angeordnete Federelement kann daher weicher ausgelegt sein, da es keine Vorschubkraft mehr übertragen muss.

Abhängig von der konkreten Anwendung der erfindungsgemäßen Werkzeugaufnahme kann das zwischen der radialen Trennwand im Grundkörper und dem Aufnahmekörper angeordnete Federelement aber auch weicher ausgelegt sein als das zwischen der radialen Trennwand im Grundkörper und dem Anker bzw. Ankerkopf angeordnete Federelement.

Die Federelemente sind bevorzugt aus Tellerfedern gebildet. Tellerfedern haben gegenüber Schraubenfedern den Vorteil, dass sie bei einem kleinen Einbauraum sehr große Kräfte aufnehmen können und eine hohe Lebensdauer haben. Durch eine fast beliebige Kombinationsmöglichkeit der Tellerfedern aus Metall und/oder Polymermaterial sowie durch eine geeignete Anordnung (Parallel- und/oder Reihenschaltung) kann insgesamt eine Federvorspannung mit einer linearen, degressiven oder auch progressiven Federkennlinie realisiert werden.

Durch eine form- und/oder kraftschlüssige Verbindung der axial gegenüberliegenden Stirnseiten des Grundkörpers und Aufnahmekörpers wird eine (ggf. weitere) zur Drehmomentübertragung drehfeste Verbindung zwischen Grundkörper und Aufnahmekörper erreicht. Die kraft- und/oder formschlüssige Verbindung der einander gegenüberliegenden Stirnseiten von Grundkörper und Aufnahmekörper lässt eine Drehmomentübertragung bzw. Drehmomentmitnahme auf einem größeren Durchmesser zu als bei dem eingangs diskutierten Stand der Technik, weil die beiden Stirnseitenflächen bei axialer Betrachtung radial außerhalb des Durchmessers des Führungsabschnitts liegen. Die Drehmomentmitnahme erfolgt daher auf einem größeren Durchmesser als bei dem eingangs diskutierten Stand der Technik. Erfindungsgemäß können also höhere Drehmomente übertragen werden. Darüber hinaus wird die Drehmomentmitnahme räumlich von der axialelastischen Vorspannung getrennt, was den Vorteil hat, dass die Drehmomentmitnahme unabhängig von der axialelastischen Vorspannung gestaltet werden kann.

Eine form- und/oder kraftschlüssige Drehmomentmitnahme zwischen den einander gegenüberliegenden Stirnseiten des Grundkörpers und Aufnahmekörpers lässt sich beispielsweise durch wenigstens einen Mitnehmer, im Besonderen zylindrischen Mitnehmerstift, realisieren, der von der Stirnseite eines der beiden Körper (Grundkörper und Aufnahmekörper) aus axial vorspringt und in eine gegenüberliegende Eingriffsöffnung, im Besonderen Eingriffsbohrung, an dem anderen Körper axial beweglich eingreift. Der wenigstens eine Mitnehmer befindet sich, wie oben erwähnt, in einem relativ großen Abstand zur Drehachse der Grundaufnahme, wodurch sich ein hohes Drehmomentübertragungsvermögen ergibt. Vorzugsweise erfolgt die form- und/oder kraftschlüssige Drehmomentmitnahme durch zwei, bezüglich der Drehachse der Werkzeugaufnahme diametral angeordnete Mitnehmer.

Grundkörper und Aufnahmekörper sind darüber hinaus in Dreh- bzw. Torsionsrichtung vorzugsweise nicht starr, sondern über eine Torsionsdämpfung miteinander verbunden. Durch eine torsionsgedämpfte Drehmomentmitnahme kann eine größere Laufruhe des in der Werkzeugaufnahme gehalten Werkzeugs erreicht werden als ohne Torsionsdämpfung. Eine torsionsgedämpfte Drehmomentmitnahme gelingt besonders einfach, wenn beispielsweise der wenigstens eine Mitnehmer in eine in der Eingriffsöffnung an dem anderen Körper eingepasste Passhülse aus einem elastischen Polymermaterial eingreift. Analog dazu kann der wenigstens eine Mitnehmer an dem einen Körper, von dem aus er axial vorspringt, in einer in einer Aufnahmeöffnung, im Besonderen Aufnahmebohrung, sitzenden Passhülse aus einem elastischen Polymermaterial angeordnet sein. Bei einer torsionsgedämpften Drehmomentmitnahme, die eine eng begrenzte Verdrehung zwischen Grundkörper und Aufnahmekörper zulässt, muss der Ankerschaft, sofern er in dem axialen Durchbruch in der radialen Trennwand im Grundkörper formschlüssig aufgenommen sein soll, das für die eng begrenzte Verdrehung des Aufnahmekörpers relativ zum Grundkörper erforderliche Spiel in Drehrichtung zugestanden sein, z.B. durch eine entsprechend großzügige Bemessung des Formschlusses zwischen der Außenkontur des Ankerschafts und der Innenkontur des axialen Durchbruchs.

Die erfindungsgemäße Werkzeugaufnahme hat vorzugsweise des Weiteren ein inneres, vorzugsweise entlang der Drehachse, d.h. zentrisch, durch das Spannfutter laufendes Kühlschmiermittelkanalsystem zur Zufuhr eines werkzeugmaschinenseitig zugeführten Kühlschmiermittels zu einem im Aufnahmekörper aufgenommenen Werkzeug. Die erfindungsgemäße Werkzeugaufnahme kann hierzu eine Kühlschmiermittelübergabeeinheit, beispielsweise eine an sich bekannte MMS (Minimalmengenschmierung)-Kühlschmiermittelübergabeeinheit, mit einem durch eine axiale Durchgangsbohrung im Anker geführten Kühlschmiermittelübergaberohr aufweisen. Der werkzeugseitige Endabschnitt des Kühlschmiermittelübergaberohrs ist vorzugsweise axialbeweglich in einer zentrischen Bohrung einer, die axiale Lage eines im Aufnahmekörper eingespannten Werkzeugs definierenden Einstellschraube angeordnet, die das Kühlschmiermittel an das Werkzeug übergibt. Der Ringspalt zwischen dem Außenumfang des Kühlschmiermittelübergaberohrs und dem Innenumfang der zentrischen Bohrung der axialen Einstellschraube ist vorzugsweise durch eine in einer innenumfangsseitigen Ringnut der axialen Einstellschraube angeordneten O-Ring-Dichtung abgedichtet.

Der werkzeugmaschinenseitige Endabschnitt des Kühlschmiermittelübergaberohrs kann von einem den Anker werkzeugmaschinenseitig überlagernden Verschlusselement, z.B. Schraubverschluss, dreh- und axial gehalten, z.B. eingepresst, sein. Durch das Verschlusselement wird das Eindringen von Schmutzpartikel in Richtung des oder der Federelemente über einen seitlichen Ringspalt zwischen dem Außenumfang des Ankerkopfs und dem Innenumfang der Ausnehmung im Schaftabschitt des Grundkörpers verhindert und damit die Funktionstüchtigkeit der elastischen Vorspannung sichergestellt. Des Weiteren kann das Verschlusselement eine Schnittstelle zum Anschluss an eine werkzeugmaschinenseitig vorgesehene Kühlschmiermitteleinspeisestelle bilden, da dessen axiale Position im Grundkörper von der Stellung des Ankers bzw. der axialen Einstellschraube unabhängig festgelegt werden kann.

Das Verschlusselement kann hierzu in eine in die Ausnehmung im Schaftabschnitt des Grundkörpers mündende Gewindebohrung eingeschraubt sein. Des Weiteren kann das Verschlusselement werkzeugseitig einen Rohrvorsprung aufweisen, der in dem der werkzeugmaschinenseitige Endabschnitt des Kühlschmiermittelübergaberohr sitzt und der in die Durchgangsbohrung des Ankers mit einem definierten seitlichen Spiel eingreift, wodurch das Kühlschmiermittelübergaberohr eine radiale Zentrierung und Befestigung durch den Anker erfahren kann.

In einer bevorzugten Weiterbildung hat des Weiteren die dem Aufnahmekörper zugewandte Stirnseite des Hülsenabschnitts des Grundkörpers einen außenumfangsseitig umlaufenden, axialen Ringvorsprung, der einen zylindrischen Vorsprung der der dem Grundkörper zugewandten Stirnseite des Aufnahmekörpers mit einem definierten seitlichen Spiel umgreift. Auf einer durch den zylindrischen Vorsprung definierten, stirnseitigen Ringstufe des Aufnahmekörpers kann ferner eine O-Ring-Dichtung angeordnet sein, an der sich der Ringvorsprung des Hülsenabschnitts des Grundkörpers axial abstützt. Die O-Ring-Dichtung ist damit zwischen einer den zylindrischen Vorsprung des Aufnahmekörpers umgebenden Ringfläche und der dem Aufnahmekörper zugewandten Ringfläche des Ringsvorsprungs des Hülsenabschnitts des Grundkörpers angeordnet. Die O-Ring-Dichtung bewirkt eine Abdichtung des für den Längenausgleich erforderlichen axialen Abstand zwischen Grundkörper und Aufnahmekörper. Darüber hinaus wird durch die O-Ring-Dichtung eine von der oben beschriebenen Torsionsdämpfung räumlich getrennte axiale Dämpfung zwischen Grundkörper und Aufnahmekörper erreicht.

Wenn darüber hinaus die axiale Eingriffstiefe des zylindrischen Vorsprung des Aufnahmekörpers in den Ringvorsprung des Grundkörpers größer-gleich dem maximal möglichen Längenausgleich zwischen Aufnahmekörper und Grundkörper ist, wird zusätzlich zur axialen Führung durch den in der Führungsbohrung des Hülsenabschnitts aufgenommenen Führungsabschnitt des Aufnahmekörpers aufgrund im Ringvorsprung des Grundkörpers mit einem definierten seitlichen Spiel aufgenommenen zylindrischen Vorsprung des Aufnahmekörpers eine weitere axiale Führung des Aufnahmekörpers relativ zum Grundkörper ermöglicht. In der bevorzugten Weiterbildung kann der Aufnahmekörper daher eine mehrfache, axial beabstandete und auf verschiedenen Durchmessern erfolgende axiale Führung am bzw. im Grundkörper erfahren, wodurch eine hohe Rundlaufgenauigkeit des Aufnahmekörpers und damit eines im Aufnahmekörper gehaltenen Werkzeugs erreicht wird.

Die erfindungsgemäße Werkzeugaufnahme wird im Folgenden anhand zweier Ausführungsformen sowie verschiedener Abwandlung der Ausführungsformen weiter erläutert.
Fig. 1 zeigt eine Seitenansicht einer ersten Ausführungsform einer erfindungsgemäßen Werkzeugaufnahme 1.
Fig. 2 zeigt eine Stirnansicht der ersten Ausführungsform.
Fig. 3 zeigt einen axialen Längsschnitt der ersten Ausführungsform in einem größeren Maßstab.
Fig. 4 zeigt einen axialen Längsschnitt der ersten Ausführungsform in perspektivischer Darstellung.
Fig. 5 zeigt eine zweite Ausführungsform einer erfindungsgemäßen Werkzeugaufnahme.
Fig. 6 zeigt einen axialen Längsschnitt der zweiten Ausführungsform in einem größeren Maßstab.
Fig. 7 zeigt einen Querschnitt der zweiten Ausführungsform an der Stelle D-D.

### (Erste Ausführungsform)

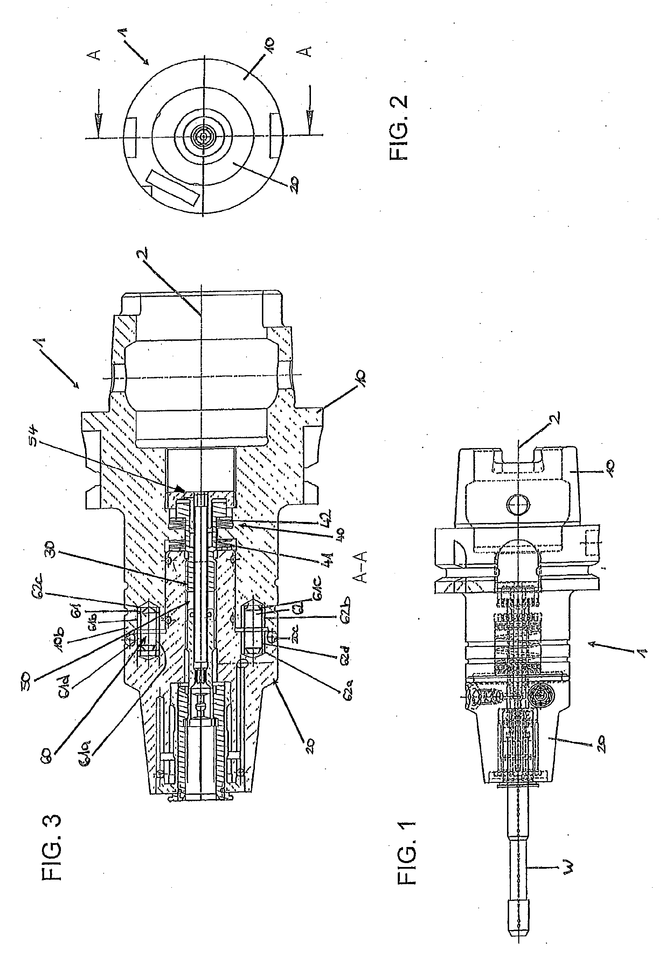

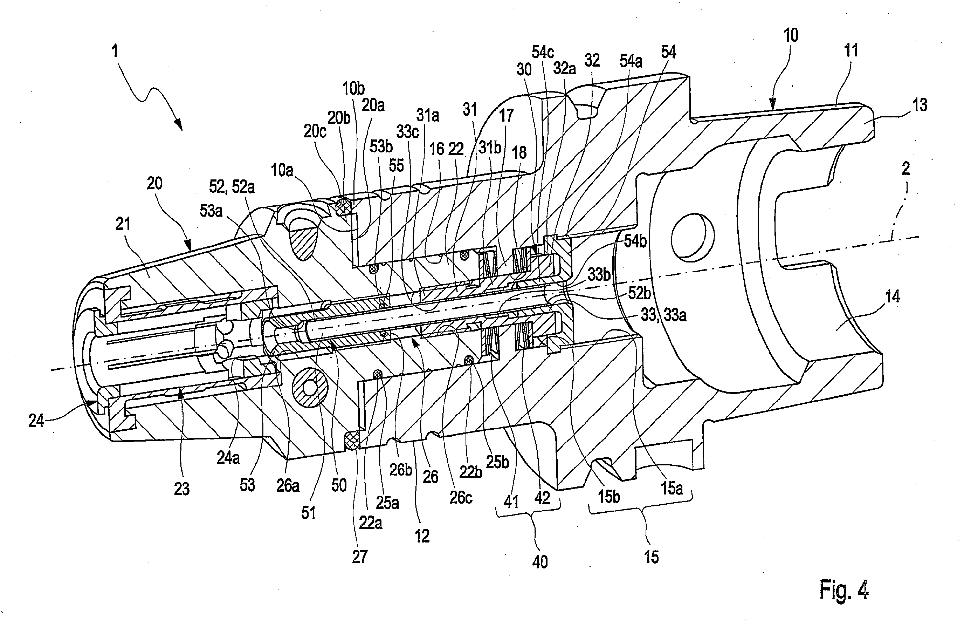

Fig. 1 bis 4 zeigen eine erste Ausführungsform einer erfindungsgemäßen Werkzeugaufnahme 1. Fig. 1 zeigt eine Seitenansicht, Fig. 2 eine Stirnansicht und Fig. 3 einen axialen Längsschnitt der Werkzeugaufnahme 1. Fig. 4 zeigt einen axialen Längsschnitt der ersten Ausführungsform in perspektivischer Darstellung.

Die Werkzeugaufnahme 1 entspricht im Aufbau und in der Funktionsweise einem an sich bekannten Hydraulik-Dehnspannfutter. Sie hat allerdings einen aus einem Grundkörper 10 und einem Aufnahmekörper 20 gebildeten zweiteilig Aufbau, der sich im Detail aus Fig. 3 und Fig. 4 ergibt. Der Grundkörper 10 und der Aufnahmekörper 20 sind für eine Drehmomentübertragung über eine Drehmomentmitnahmeeinrichtung 60 drehelastisch und für einen axialen Längenausgleich über eine Federeinrichtung 40 axialelastisch miteinander verbunden. Die Werkzeugaufnahme 1 weist des Weiteren eine sich entlang der Drehachse 2 erstreckende, zentrisch angeordnete Kühlschmiermittelübergabeeinheit 50 auf.

Der Grundkörper 10 ist funktional in einen Schaftabschnitt 11 und einen Hülsenabschnitt 12 unterteilt, die sich entlang der Drehachse 2 der Werkzeugaufnahme 1 erstrecken. Der Schaftabschnitt 11 dient zur Ankopplung der Werkzeugaufnahme 1 an eine (nicht gezeigte) Werkzeugmaschinenspindel oder ein (ebenfalls nicht gezeigtes) Werkzeugmodul eines modular aufgebauten Werkzeugsystems. Der Schaftabschnitt 11 hat hierzu einen Hohlschaftkegel 13 mit einer axialen Innenausnehmung 14 und einer über die Innenausnehmung 14 zugänglichen, werkzeugmaschinenseitig offenen, zentrischen Ausnehmung in Form einer Stufenbohrung 15. Die Stufenbohrung 15 weist in Richtung Aufnahmekörper 20 (in Fig. 3 und Fig. 4 von rechts nach links) einen in die Innenausnehmung 14 des Hohlschaftkegels 13 mündenden Gewindebohrungsabschnitt 15a sowie einen an den Gewindebohrungsabschnitt 15a anschließenden zylindrischen Bohrungsabschnitt 15b kleineren Durchmessers auf. Im zylindrischen Bohrungsabschnitt 15b ist eines (42) von zwei Federelementen 41, 42 der Federeinrichtung 40 aufgenommen. Der den Schaftabschnitt 11 in Richtung Aufnahmekörper 20 axial verlängernde Hülsenabschnitt 12 weist eine werkzeugseitig offene, zentrische Führungsbohrung 16 auf. Die Führungsbohrung 16 ist durch eine radiale Trennwand 17 von der axialen Ausnehmung 15 des Schaftabschnitts 11 getrennt. In der Führungsbohrung 16 ist das andere (41) der beiden Federelemente 41, 42 der Federeinrichtung 40 aufgenommen. In der radialen Trennwand 17 ist ein axialer Durchbruch in Form einer zentrischen Durchgangsbohrung 18 vorgesehen. Die Führungsbohrung 16 des Hülsenabschnitts 12, die Durchgangsbohrung 18 in der radialen Trennwand 17 sowie die zentrische Ausnehmung 15 und die Innenausnehmung 14 des Schaftabschnitts 11 erstrecken sich längs der Drehachse 2 der Werkzeugaufnahme 1.

Der Aufnahmekörper 20 ist funktional in einen Aufnahmeabschnitt 21 und einen Führungsabschnitt 22 unterteilt, die sich entlang der Drehachse 2 der Werkzeugaufnahme 1 erstrecken. Der Aufnahmeabschnitt 21 dient zur Aufnahme und zum Spannen eines nur in Fig. 1 gezeigten Werkzeugs W und weist hierzu einen an sich bekannten Hydraulik-Dehnspannmechanismus 23 auf. In der ersten Ausführungsform wird das zu spannende Werkzeug W im Hydraulik-Dehnspannmechanismus 23 über eine Reduzierbuchse 24 mit positiver Drehmomentmitnahme zwischen dem Werkzeugschaft und der Reduzierbuchse 24 gespannt. Die Reduzierbuchse 24 hat hierzu an ihrem inneren Ende eine Innenvierkantkontur 24a zur formschlüssigen Aufnahme eines Außenvierkantabschnitts am Schaftende des Werkzeugschafts des Werkzeugs W. Alternativ dazu kann das zu spannende Werkzeug ohne die Reduzierbuchse 24 direkt gespannt werden. Der den Aufnahmeabschnitt 21 in Richtung Grundkörper 10 verlängernde zylindrische Führungsabschnitt 22 ist in der Führungsbohrung 16 des Grundkörpers 10 mit einem definierten seitlichen Spiel axialbeweglich aufgenommen. Der Ringspalt zwischen dem Außenumfang des Führungsabschnitts 22 des Aufnahmekörpers 20 und dem Innenumfang der Führungsbohrung 16 des Grundkörpers 10 ist über zwei O-Ring-Dichtungen 25a, 25b abgedichtet, die jeweils in einer außenumfangsseitigen Ringnut 22a, 22b des Führungsabschnitts 22 aufgenommen sind. Durch den Führungsabschnitt 22 hindurch verläuft eine zentrische Stufenbohrung 26, die in Richtung Grundkörper (in Fig. 3 und Fig. 4 von links nach rechts betrachtet) einen zylindrischen Bohrungsabschnitt 26a, einen im Durchmesser kleineren Gewindebohrungsabschnitt 26b sowie einen im Durchmesser größeren Gewindebohrungsabschnitt 26c aufweist.

Erfindungsgemäß ist der Aufnahmekörper 20 im Grundkörper 10 über den Anker 30 verankert. Der Anker 30 ist funktional in einen die Durchgangsbohrung 18 in der radialen Trennwand 17 des Grundkörpers 10 durchgreifenden Ankerschaft 31 und einen am Ankerschaft 31 angeordneten Ankerkopf 32 unterteilt. In der Ausführungsform ist der Anker 30 in der Art einer Kopfschraube ausgebildet. Der Ankerschaft 31 ist über ein an seinem werkzeugseitigen Endabschnitt 31a vorgesehenes Außengewinde in den Gewindebohrungsabschnitt 26c größeren Durchmessers des Führungsabschnitts 22 des Aufnahmekörpers 20 eingeschraubt und über einen zylindrischen Mittelabschnitt 31 b mit einem definierten seitlichen Spiel in der Durchgangsbohrung 18 der radialen Trennwand 17 axial- und drehbeweglich aufgenommen. Der Aufnahmekörper 20 erhält dadurch über den Anker 30 eine zusätzliche axiale Führung im Grundkörper 10. Der Ankerkopf 32 hat einen zylindrischen Außenumfang 32a und bildet einen Anschlag für das Federelement 42. In der Ausführungsform sind der Ankerschaft 31 und der Ankerkopf 32 einstückig ausgebildet. Der Anker 30 ist daher als solcher durch Verschraubung relativ zum Aufnahmekörper 20 an diesem axial verstellbar angeordnet. Durch den Anker 30 hindurch verläuft eine axiale Durchgangsbohrung in Form einer Stufenbohrung 33. Die Stufenbohrung 33 weist in Richtung Aufnahmekörper 20 (in Fig. 3 und Fig. 4 von rechts nach links betrachtet) einen Bohrungsabschnitt 33a größeren Durchmessers, einen Innensechskantabschnitt 33b und einen Bohrungsabschnitt 33c kleineren Durchmessers auf. In den Innensechskantabschnitt 33b kann in Fig. 3 und Fig. 4 von rechts über die Innenausnehmung 14 im Hohlschaftkegel 13, die Ausnehmung 15 im Schaftabschnitt 11 des Grundkörpers 10 und den Bohrungsabschnitt 33a größeren Durchmessers der Stufenbohrung 33 im Anker 30 ein passender Werkzeugschlüssel eingeführt werden, um den Anker 30 durch Verschraubung im Grundkörper 10 axial zu verstellen.

Die die Federvorspannung zwischen Grundkörper 10 und Aufnahmekörper 20 bewirkende Federeinrichtung 40 ist, wie bereits erwähnt, durch die beiden Federelemente 41, 42 realisiert, wobei das Federelement 41 zwischen der werkzeugmaschinenseitigen Stirnseite des Führungsabschnitts 22 des Aufnahmekörpers 20 und der werkzeugseitigen Stirnseite der radialen Trennwand 17 des Grundkörpers 10 und das Federelement 42 zwischen der werkzeugmaschinenseitigen Stirnseite der radialen Trennwand 17 und der werkzeugseitigen Stirnseite des Ankerkopfs 32 des Ankers 30 angeordnet ist. Die beiden Federelemente 41, 42 sind jeweils als ein Federpaket aus mehreren Tellerfedern aus Metall und/oder Polymermaterial gebildet und haben dieselbe Federkennlinie. Fig. 3 und Fig. 4 zeigen im Besonderen, dass die Federpakete jeweils aus drei Tellerfedem zusammengesetzt sind, die insgesamt in Reihe geschaltet sind, wobei allerdings zwei der drei Tellerfedern parallel geschaltet sind. Der Ankerschaft 31 erstreckt sich mittig durch die beiden Federelemente 41, 42 hindurch. Die beiden Federelemente 41, 42 sehen einen für den axialen Längenausgleich erforderlichen geringen axialen Abstand zwischen Grundkörper 10 und Aufnahmekörper 20 vor und ermöglichen einen Längenausgleich sowohl in Druck- wie auch in Zugrichtung entlang der Drehachse 2 der Werkzeugaufnahme 1. Eine Verschraubung des Ankers 30 relativ zum Aufnahmekörper 20 bewirkt eine synchrone Änderung der Federvorspannung oder des Federwegs der beiden Federelemente 41, 42. Zur Einstellung der Federvorspannung der Federeinrichtung 40 wird der Anker 30, wie oben erwähnt, über die Innenausnehmung 14 des Hohlschaftkegels 13 und die an diese anschließende, zentrische Ausnehmung 15 des Schaftabschnitts 11 mittels eines geeigneten Werkzeugschlüssels betätigt.

Zur Drehmomentübertragung zwischen Grundkörper 10 und Aufnahmekörper 20 sind die axial gegenüberliegenden Stirnseiten 10a, 20a des Grundkörpers 10 und Aufnahmekörpers 20 in Drehrichtung form- und kraftschlüssig miteinander verbunden. Die form- und kraftschlüssige Verbindung zwischen den gegenüberliegenden Stirnseiten 10a, 20a des Grundkörpers 10 und Aufnahmekörpers 20 wird durch zwei diametral angeordnete zylindrische Mitnehmerstifte 61, 62 realisiert, die von der Stirnseite 10a des Grundkörpers 10 aus axial vorspringen und in gegenüberliegende Eingriffsbohrungen 61 a, 62a (Eingriffsöffnungen) am Aufnahmekörper 20 axial beweglich eingreifen. Die beiden Mitnehmerstifte 61, 62 sind jeweils über eine in einer axialen Aufnahmebohrung 61 b, 62b (Aufnahmeöffnung) am Grundkörper 10 sitzenden Passhülse 61 c, 62c aus einem elastischen Polymermaterial angeordnet und greifen jeweils axial beweglich in eine in der zugeordneten Eingriffsbohrung 61a, 62a am Aufnahmekörper 20 eingepasste Passhülse 61 d, 62d aus einem elastischen Polymermaterial ein. Der Grundkörper 10 und Aufnahmekörper 20 sind daher in Dreh- bzw. Torsionsrichtung nicht starr sondern dank der elastischen Passhülsen 61 c, 62c, 61 d, 62d torsionsgedämpft drehelastisch miteinander verbunden. Fig. 3 und Fig. 4 zeigen, dass die durch die Mitnehmerstifte 61, 62 realisierte form- und kraftschlüssige Verbindung zwischen dem Grundkörper 10 und Aufnahmekörper 20 bei axialer Betrachtung radial außerhalb des Führungsabschnitts 22 des Aufnahmekörpers 20 erfolgt, wodurch ein hohes Drehmoment übertragen werden kann.

Wie sich aus Fig. 3 und Fig. 4 weiter ergibt, hat die Stirnseite 10a des Hülsenabschnitts 12 des Grundkörpers 10 einen außenumfangsseitig umlaufenden Ringvorsprung 10b, der einen zylindrischen Vorsprung 20b der Stirnseite 20a des Aufnahmekörpers 20 mit einem definierten seitlichen Spiel umgreift. Auf der Außenumfangsfläche des zylindrischen Vorsprung 20b des Aufnahmekörpers 20a sitzt eine O-Ring-Dichtung 27. Die O-Ring-Dichtung 27 ist damit zwischen der den zylindrischen Vorsprung 20b des Aufnahmekörpers 20 umgebenden, dem Grundkörper 10 zugewandten Ringfläche 20c und der dem Aufnahmekörper 20 zugewandten Stirnseite des Ringsvorsprungs 10b des Hülsenabschnitts 12 des Grundkörpers 10 angeordnet. Die O-Ring-Dichtung 27 bewirkt eine Abdichtung des für den Längenausgleich erforderlichen, durch die Federvorspannung sichergestellten axialen Spalts zwischen Grundkörper 10 und Aufnahmekörper 20 und sieht eine axiale Dämpfung zwischen Aufnahmekörper 20 und Grundkörper 10 vor. Durch den axialen Eingriff des zylindrischen Vorsprungs 20b des Aufnahmekörpers 20 in den Ringvorsprung 10b des Hülsenabschnitts 12 des Grundkörpers 10 wird des Weiteren zusätzlich zur axialen Führung durch den in der Führungsbohrung 16 des Hülsenabschnitts 12 aufgenommenen Führungsabschnitts 22 des Aufnahmekörpers 20 eine - wenn auch knapp bemessene - weitere axiale Führung des Aufnahmekörpers 20 relativ zum Grundkörper 10 erreicht.

Die in Fig. 1 bis 4 gezeigte Werkzeugaufnahme 1 hat des Weiteren eine entlang der Drehachse 2 zentrisch durch die Werkzeugaufnahme 1 verlaufende MMS (Minimalmengenschmierung)-Kühlschmiermittelübergabeeinheit 50, die einen zentrischen Kühlschmiermittelkanal 51 zur Zufuhr eines werkzeugmaschinenseitig zugeführten Kühlschmiermittels zu einem im Aufnahmekörper 20 aufgenommenen Werkzeug W definiert. Die Kühlschmiermittelübergabeeinheit 50 weist ein die Stufenbohrung 33 des Ankers 30 durchdringendes Kühlschmiermittelübergaberohr 52, eine in dem werkzeugseitig zugänglichen Gewindebohrungsabschnitt 26b kleineren Durchmessers des Führungsabschnitts 22 eingeschraubte axialen Einstellschraube 53 sowie ein in den werkzeugmaschinenseitig zugänglichen Gewindebohrungsabschnitt 15a der Ausnehmung 15 des Grundkörpers 10 eingeschraubtes Verschlusselement 54 (Schraubverschluss) auf. Das Kühlschmiermittelübergaberohr 52 ist an seinem werkzeugseitigen Endabschnitt 52a in einer axialen Durchgangsbohrung 53a der axialen Einstellschraube 53 mit einem definierten seitlichen Spiel axial beweglich aufgenommen. Das seitliche Spiel zwischen dem Außenumfang des Kühlschmiermittelübergaberohrs 52 und dem Innenumfang der axialen Einstellschraube 53 wird durch eine O-Ring-Dichtung 55 abgedichtet, die in einer innenumfangsseitigen Ringnut 53b der axialen Einstellschraube 53 angeordnet ist. Das Kühschmiermittelübergaberohr 52 erstreckt sich des Weiteren durch die den Anker 30 durchdringende Stufenbohrung 33 und ist an seinem werkzeugmaschinenseitigen Endabschnitt 52b in einer Durchgangsbohrung 54b des den Anker 30 werkzeugmaschinenseitig überlagernden Verschlusselements 54 fluiddicht eingepresst, d.h. mit dem Verschlusselement 54 dreh- und axialfest verbunden. Das Verschlusselement 54 weist außenumfangsseitig ein Außengewinde 54a auf, das in den Gewindebohrungsabschnitt 15a der Stufenbohrung 15 des Schaftabschnitts 11 des Grundkörpers 10 eingeschraubt ist. Das Verschlusselement 54 verhindert das Eindringen von Schmutzpartikel in Richtung der beiden Federelemente 41, 42 der Federeinrichtung 40 über den seitlichen Spalt zwischen Anker 30 und Grundkörper 10. Des Weiteren bildet das Verschlusselement 54, dessen axiale Position im Grundkörper 10 von der Stellung des Ankers 30 bzw. der axialen Einstellschraube 53 unabhängig ist, eine Schnittstelle zum Anschluss der Kühlschmiermittelübergabeeinheit 50 an eine werkzeugmaschinenseitig vorgesehene (nicht gezeigte) Kühlschmiermitteleinspeisestelle.

Wie es in Fig. 1 gezeigt ist, hat das Verschlusselement 54 werkzeugseitig einen Rohrvorsprung 54c, der in den im Durchmesser vergrößerten Bohrungsabschnitt 33a der Stufenbohrung 33 des Ankers 30 eingreift, wodurch der Anker 30 eine zusätzliche Zentrierung und Befestigung erfährt. Eine Verdrehung des Verschlusselements 54 bewirkt eine axiale Verstellung des Kühlschmiermittelübergaberohrs 52 relativ zur axialen Einstellschraube 53 bzw. zum Anker 30.

### (Zweite Ausführungsform)

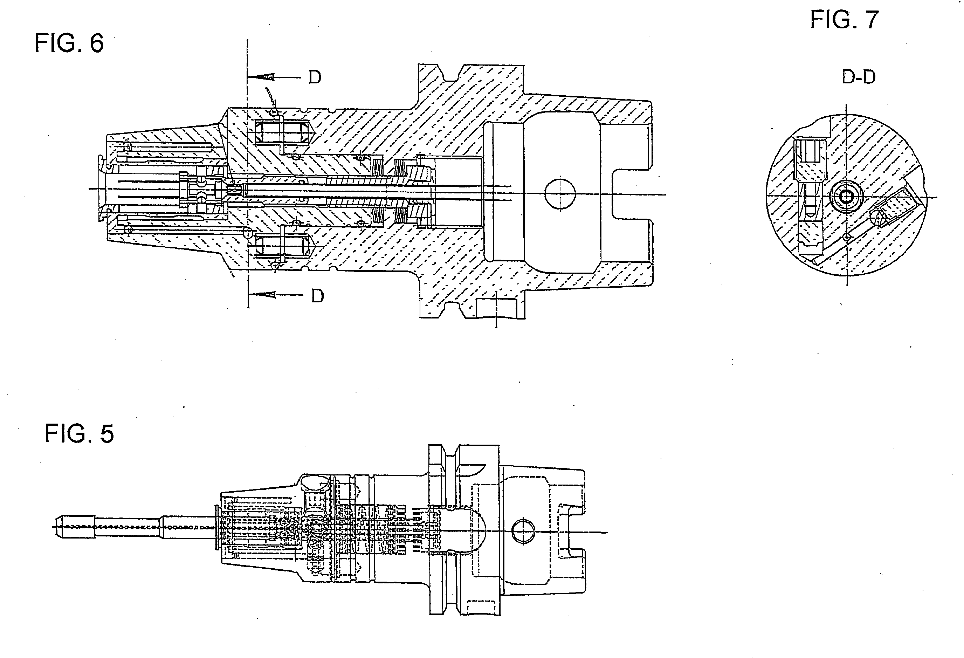

Fig. 5 bis 7 zeigen eine zweite Ausführungsform einer erfindungsgemäßen Werkzeugaufnahme 1. Fig. 5 zeigt eine Seitenansicht, Fig. 6 und Fig. 7 zeigen einen axialen Längsschnitt bzw. einen Querschnitt der Werkzeugaufnahme 1.

Die zweite Ausführungsform unterscheidet sich von der ersten Ausführungsform im Wesentlichen nur in der die Federvorspannung zwischen Grundkörper 10 und Aufnahmekörper 20 bewirkende Federeinrichtung 40. In der zweiten Ausführungsform sind die beiden Federelemente 41, 42 jeweils als ein Federpaket aus drei parallel geschalteten Tellerfedern aus Metall und/oder Polymermaterial gebildet, wie sich aus Fig. 6 ergibt.

### (Abwandlungen)

Im Folgenden werden verschiedene Abwandlungen der oben beschriebenen Ausführungsformen erläutert, die innerhalb der Grenzen des technisch Machbaren selektiv oder in beliebiger Kombination auf jede der oben beschriebenen beiden Ausführungsformen übertragen werden können.

In den oben beschriebenen Ausführungsformen hat der Anker zur axialen Verstellung einen Innensechskantabschnitt für den Eingriff eines passenden Werkzeugschlüssels und der Ankerkopf einen zylindrischen Außenumfang. Alternativ dazu kann die axiale Verstellung des Ankers über einen Ankerkopf erfolgen. Der Ankerkopf kann hierzu wie eine herkömmliche Kopfschraube eine Außensechskantkontur aufweisen.

In den oben beschriebenen Ausführungsformen ist der Anker einstückig ausgebildet und damit als solcher relativ zum Aufnahmekörper an diesem verstellbar angeordnet. Alternativ dazu können der Ankerschaft und Ankerkopf separat ausgebildet sein, wobei der Ankerkopf am Ankerschaft axial verstellbar angeordnet ist.

Der Ankerschaft kann beispielsweise von einem Gewindebolzen gebildet sein, der analog der vorstehend beschriebenen einstückigen Ausbildung in eine axiale Gewindebohrung des Führungsabschnitts eingeschraubten Kopfschraube eingeschraubt ist. Der Gewindebolzen kann, muss aber nicht über seine gesamte Länge ein durchgehendes Außengewinde aufweisen. Analog zur oben beschriebenen Kopfschraube kann der Gewindebolzen an seiner werkzeugmaschinenseitigen Stirnseite für eine Verschraubung mit dem Aufnahmekörper eine werkzeugmaschinenseitig zugängliche Eingriffsöffnung für ein Betätigungswerkzeug, z.B. Innensechskant, Schlitz oder Kreuzschlitz, aufweisen.

Des Weiteren kann der Ankerschaft am Führungsabschnitt des Aufnahmekörpers einstückig angefügt oder befestigt sein.

Wenn der Ankerkopf am Ankerschaft verstellbar angeordnet ist, kann der mit dem Führungsabschnitt des Aufnahmekörpers fest verbundene Ankerschaft in dem radialen Durchbruch mit einer definierten Spielpassung drehfest, z.B. durch einen Formschluss zwischen seiner Außenkontur und der Innenkontur des axialen Durchbruchs, aufgenommen sein. Durch die drehfeste Anordnung wird nicht nur eine zusätzliche axiale Führung des Aufnahmekörpers erreicht, sondern auch eine Drehmomentmitnahme zwischen Grundkörper und Aufnahmekörper.

Der Ankerkopf von einer in eine axiale Gewindebohrung des Gewindebolzens eingeschraubten Kopfschraube oder einer auf einen Außengewindeabschnitt des Gewindebolzens aufgeschraubten Ankermutter gebildet sein. Die Ankermutter kann in der Art einer Schraubenmutter mit polygonaler Außenkontur (Sechskant, Vierkant, etc.) oder in der Art einer Nutmutter oder Kreuzlochmutter mit zylindrischer Außenkontur und werkzeugmaschinenseitig zugänglichen Nuten, Löchern oder dergleichen für den Eingriff eines Betätigungswerkzeugs ausgebildet sein.

In den oben beschriebenen Ausführungsformen sind die Federelemente jeweils als Federpakete aus drei Tellerfedern gebildet. Alternativ zu Tellerfedern können auch eine oder mehre Schraubenfedern, im Besonderen Druckschraubenfedern, Elastomerfedern (Gummifedern) sowie Kombinationen daraus und/oder mit Tellerfedern eingesetzt werden. Grundsätzlich kann durch eine geeignete Kombination verschiedener Federelementen und/oder Materialien die dadurch erhaltenen Federvorspannungen optimal an die jeweiligen Bedürfnisse angepasst werden.

Abweichend von den oben beschriebenen Ausführungsformen können die beiden Federelemente verschiedene Federkennlinien haben. Beispielsweise kann das zwischen der radialen Trennwand im Grundkörper und dem Aufnahmekörper angeordnete Federelement, das die axiale Vorschubkraft vom Grundkörper auf den Aufnahmekörper überträgt, härter ausgelegt sein als das zwischen der radialen Trennwand im Grundkörper und dem Anker bzw. Ankerkopf angeordnete Federelement. Durch ein Federelement mit einer hohen Härte zwischen dem Aufnahmekörper und der radialen Trennwand im Grundkörper kann erreicht werden, dass die auf den Grundkörper ausgeübte axiale Vorschubkraft der Werkzeugmaschinenspindel möglichst verzögerungsfrei auf den Aufnahmekörper übertragen wird, was bei einer Gewindeerzeugung für den Gewindeanschnitt förderlich sein kann. Sobald das Gewinde sicher angeschnitten ist, wird im Wesentlichen nur noch die Drehbewegung der Maschinenspindel auf das Gewindeerzeugungswerkzeug übertragen, da sich das Gewindeerzeugungswerkzeug durch das angeschnittene Gewinde dann selbsttätig in die Kernlochbohrung zieht. Das zwischen der radialen Trennwand im Grundkörper und dem Anker bzw. Ankerkopf angeordnete Federelement kann daher weicher ausgelegt sein, da es keine Vorschubkraft überträgt.

Abhängig von der konkreten Anwendung der erfindungsgemäßen Werkzeugaufnahme kann das zwischen der radialen Trennwand im Grundkörper und dem Aufnahmekörper angeordnete Federelement aber auch weicher ausgelegt sein als das zwischen der radialen Trennwand im Grundkörper und dem Anker bzw. Ankerkopf angeordnete Federelement.

Abweichend von den oben beschriebenen Ausführungsformen, in denen die beiden Stirnseiten des Grundkörpers und Aufnahmekörpers durch in elastische Passhülsen eingepasste Mitnehmerstifte form- und kraftschlüssig in Drehrichtung miteinander verbunden sind, können der oder die Mitnehmer eine andere Gestalt, beispielsweise eine polygonale Außenkontur, oder dergleichen, haben.

### Bezugszeichenliste

- 1: Werkzeugaufnahme
- 2: Drehachse

- 10: Grundkörper
- 10a: Stirnseite
- 10b: Ringvorsprung
- 11: Schaftabschnitt
- 12: Hülsenabschnitt
- 13: Hohlschaftkegel
- 14: Innenausnehmung
- 15: Stufenbohrung (zentrische Ausnehmung)
- 15a: Gewindebohrungsabschnitt
- 15b: Bohrungsabschnitt
- 16: Führungsbohrung
- 17: Trennwand
- 15: Ausnehmung
- 18: Durchgangsbohrung

- 20: Aufnahmekörper
- 20a: Stirnseite
- 20b: zylindrischer Vorsprung
- 20c: Ringstufe
- 21: Aufnahmeabschnitt
- 22: Führungsabschnitt
- 22a: Ringnut
- 22b: Ringnut
- 23: Hydraulik-Dehnspannmechanismus
- 24: Reduzierbuchse
- 24a: Innenvierkantkontur
- 25a: O-Ring-Dichtung
- 25b: O-Ring-Dichtung
- 26: Stufenbohrung
- 26a: Bohrungsabschnitt
- 26b: Gewindebohrungsabschnitt
- 26c: Gewindebohrungsabschnitt
- 27: O-Ring-Dichtung

- 30: Anker
- 31: Ankerschaft
- 32: Ankerkopf
- 31a: Endabschnitt
- 31b: Mittelabschnitt
- 32a: Außensechskantkontur
- 33: Stufenbohrung (Durchgangsbohrung)
- 33a: Gewindebohrungsabschnitt
- 33b: Bohrungsabschnitt
- 33c: Bohrungsabschnitt

- 40: Federeinrichtung
- 41: Federelement
- 42: Federelement

- 50: Kühlschmiermittelübergabeeinheit
- 51: Kühlschmiermittelkanal
- 52: Kühlschmiermittelübergaberohr
- 52a: Endabschnitt
- 52b: Endabschnitt
- 53: Einstellschraube
- 53a: Durchgangsbohrung
- 53b: Ringnut
- 54: Verschlusselement
- 54a: Außengewinde
- 54b: Durchgangsbohrung
- 54c: Rohrvorsprung
- 55: O-Ring-Dichtung

- 60: Drehmomentmitnahmeeinrichtung
- 61: Mitnehmerstift
- 62a: Mitnehmerstift
- 61a: Eingriffsbohrung (Eingriffsöffnung)
- 62a: Eingriffsbohrung (Eingriffsöffnung)
- 61b: Aufnahmebohrung (Aufnahmeöffnung)
- 62b: Aufnahmebohrung (Aufnahmeöffnung)
- 61c: Passhülse
- 62c: Passhülse
- 61d: Passhülse
- 62d: Passhülse

## Patentansprüche

1. Werkzeugaufnahme mit einem Grundkörper (10) und einem mit dem Grundkörper (10) zur Drehmomentübertragung verbundenen und im Grundkörper (10) mit einer Federvorspannung axial beweglich verankerten Aufnahmekörper (20), wobei der Grundkörper (10) einen Schaftabschnitt (11) mit einer werkzeugmaschinenseitig offenen, vorzugsweise zentrischen Ausnehmung (15) und einen den Schaftabschnitt (11) axial verlängernden Hülsenabschnitt (12) mit einer werkzeugseitig offenen, vorzugsweise zentrischen Führungsbohrung (16) aufweist, die durch eine radiale Trennwand (17) von der Ausnehmung (15) des Schaftabschnitts (11) getrennt ist, und der Aufnahmekörper (20) einen in der Führungsbohrung (16) des Hülsenabschnitts (12) axialbeweglich geführten, vorzugsweise zylindrischen Führungsabschnitt (22) aufweist, **dadurch gekennzeichnet, dass**
der Aufnahmekörper (20) über einen einen axialen Durchbruch (18) in der radialen Trennwand (17) durchgreifenden und zur Einstellung der Federvorspannung über die Ausnehmung (15) des Grundkörpers (10) betätigbaren Anker (30) verankert ist.

2. Werkzeugaufnahme nach Anspruch 1, **dadurch gekennzeichnet, dass** der Anker (30) einen den Führungsabschnitt (22) verlängernden, den axialen Durchbruch (18) in der radialen Trennwand (17) durchgreifenden Ankerschaft (31) und einen am Ankerschaft (31) vorgesehenen, am Grundkörper (10) abgestützten Ankerkopf (32) aufweist.

3. Werkzeugaufnahme nach Anspruch 2, **dadurch gekennzeichnet, dass** der Anker (30) relativ zum Aufnahmekörper (20) axial verstellbar angeordnet ist.

4. Werkzeugaufnahme nach Anspruch 2 oder 3, **dadurch gekennzeichnet, dass** der Ankerkopf (32) relativ zum Ankerschaft (31) axial verstellbar angeordnet ist.

5. Werkzeugaufnahme nach Anspruch 3, **dadurch gekennzeichnet, dass** der Anker (30) von einer in eine axiale Gewindebohrung (26c) des Führungsabschnitts (22) eingeschraubten Kopfschraube gebildet ist.

6. Werkzeugaufnahme nach Anspruch 4, **dadurch gekennzeichnet, dass** der Ankerkopf (32) von einer in eine axiale Gewindebohrung des Ankerschafts (31) eingeschraubten Kopfschraube oder einer auf einen Außengewindeabschnitt des Ankerschafts (31) aufgeschraubten Ankermutter gebildet ist.

7. Werkzeugaufnahme nach Anspruch 2 und 4 oder 2, 4 und 6, **dadurch gekennzeichnet, dass** der Ankerschaft (31) an den Führungsabschnitt (22) des Aufnahmekörpers (20) einstückig angefügt ist.

8. Werkzeugaufnahme nach einem der Ansprüche 1 bis 7, **dadurch gekennzeichnet, dass** die Federvorspannung durch zwei axialelastische Federelemente (41, 42) bewirkt wird, die einerseits zwischen Aufnahmekörper (20) und radialer Trennwand (17) und andererseits zwischen radialer Trennwand (17) und Ankerkopf (32) angeordnet sind.

9. Werkzeugaufnahme nach einem der Ansprüche 1 bis 8, **dadurch gekennzeichnet, dass** einander gegenüberliegende Stirnseiten (10a, 20a) des Grundkörpers (10) und Aufnahmekörpers (20) zur Drehmomentübertragung form- und/oder kraftschlüssig miteinander verbunden sind.

10. Werkzeugaufnahme nach einem der Ansprüche 1 bis 9, **gekennzeichnet durch** eine zwischen Grundkörper (10) und Aufnahmekörper (20) vorgesehene Torsionsdämpfung.

11. Werkzeugaufnahme nach Anspruch 9 oder 10, **gekennzeichnet durch** wenigstens einen von der Stirnseite (10a, 20a) eines (10) der beiden Körper (10, 20) aus axial vorspringenden Mitnehmer (61, 62), der in eine gegenüberliegende Eingriffsöffnung (61 a, 62a) an dem anderen Körper (20) axial beweglich eingreift.

12. Werkzeugaufnahme nach Anspruch 11, **dadurch gekennzeichnet, dass** der wenigstens eine Mitnehmer (61, 62) in eine in der Eingriffsöffnung (61a, 62a) an dem anderen Körper (20) eingepasste Passhülse (61d, 62d) aus einem elastischen Polymermaterial eingreift.

13. Werkzeugaufnahme nach Anspruch 11 oder 12, **dadurch gekennzeichnet, dass** der wenigstens eine Mitnehmer (61, 62) an dem einen Körper (10) über eine in einer Aufnahmeöffnung (61b, 62b) sitzende Passhülse (61c, 62c) aus einem elastischen Polymermaterial befestigt ist.

14. Werkzeugaufnahme nach einem der Ansprüche 1 bis 13, **gekennzeichnet durch** eine inneres, vorzugsweise zentrisch **durch** die Werkzeugaufnahme (1) verlaufendes Kühlschmiermittelkanalsystem zur Zufuhr eines werkzeugmaschinenseitig zugeführten Kühlschmiermittels zu einem im Aufnahmekörper (20) aufgenommenen Werkzeug (W).

15. Werkzeugaufnahme nach Anspruch 14, **gekennzeichnet durch** eine Kühlschmiermittelübergabeeinheit (50) mit einem in einer axialen Durchgangsbohrung (33) des Ankers (30) aufgenommenen Kühlschmiermittelübergaberohr (52).

16. Werkzeugaufnahme nach Anspruch 15, **dadurch gekennzeichnet, dass** der werkzeugmaschinenseitige Endabschnitt (52b) des Kühlschmiermittelübergaberohrs (52) von einem den Anker (30) werkzeugmaschinenseitig überlagernden Verschlusselement (54) gehalten wird.

17. Werkzeugaufnahme nach Anspruch 16, **dadurch gekennzeichnet, dass** das Verschlusselement (54) in eine über die Ausnehmung (15) des Grundkörpers (10) zugängliche Gewindebohrung (15a) eingeschraubt ist.

18. Werkzeugaufnahme nach Anspruch 16 oder 17, **dadurch gekennzeichnet, dass** das Verschlusselement (54) werkzeugseitig einen axialen Rohrvorsprung (54b) aufweist, der in die Durchgangsbohrung (33) des Ankers (30) eingreift.

19. Werkzeugaufnahme nach einem der Ansprüche 1 bis 18, **dadurch gekennzeichnet, dass** eine dem Aufnahmekörper (20) zugewandte Stirnseite (10a) des Hülsenabschnitts (12) des Grundkörpers (10) einen axialen Ringvorsprung (10b) aufweist, der einen zylindrischen Vorsprung (20b) der der dem Grundkörper (10) zugewandten Stirnseite (20b) des Aufnahmekörpers (20) mit einem definierten seitlichen Spiel umgreift.

20. Werkzeugaufnahme nach Anspruch 19, **dadurch gekennzeichnet, dass** auf einer durch den zylindrischen Vorsprung (20b) definierten, stirnseitigen Ringfläche des Aufnahmekörpers (20) eine O-Ring-Dichtung (27) angeordnet ist, an der sich der Ringvorsprung (10b) des Hülsenabschnitts (12) des Grundkörpers (10) axial abstützt.

## Claims

1. Tool receiving member having a base member (10) and a receiving member (20) which is connected to the base member (10) for torque transmission and which is anchored in the base member (10) so as to be axially movable with resilient pretensioning, the base member (10) having a shaft portion (11) with a recess (15) which is open at the machine tool side and which is preferably central, and a sleeve portion (12) which extends the shaft portion (11) axially and which has a preferably central guiding hole (16) which is open at the tool side and which is separated from the recess (15) of the shaft portion (11) by means of a radial partition wall (17), and the receiving member (20) having a preferably cylindrical guiding portion (22) which is guided in an axially movable manner in the guiding hole (16) of the sleeve portion (12), **characterised in that**
the receiving member (20) is anchored by means of an anchor (30) which engages through an axial aperture (18) in the radial partition wall (17) and which can be actuated to adjust the resilient pretensioning via the recess (15) of the base member (10).

2. Tool receiving member according to claim 1, **characterised in that** the anchor (30) has an anchor shaft (31) which extends the guiding portion (22) and which engages through the axial aperture (18) in the radial partition wall (17) and an anchor head (32) which is provided on the anchor shaft (31) and which is supported on the base member (10).

3. Tool receiving member according to claim 2, **characterised in that** the anchor (30) is arranged so as to be axially adjustable relative to the receiving member (20).

4. Tool receiving member according to claim 2 or claim 3, **characterised in that** the anchor head (32) is arranged so as to be axially adjustable relative to the anchor shaft (31).

5. Tool receiving member according to claim 3, **characterised in that** the anchor (30) is formed by a cap screw which is screwed into an axial threaded hole (26c) of the guiding portion (22).

6. Tool receiving member according to claim 4, **characterised in that** the anchor head (32) is formed by a cap screw which is screwed into an axial threaded hole of the anchor shaft (31) or an anchor nut which is screwed onto an outer threaded portion of the anchor shaft (31).

7. Tool receiving member according to claim 2 and 4 or 2, 4 and 6, **characterised in that** the anchor shaft (31) is joined to the guiding portion (22) of the receiving member (20) in an integral manner.

8. Tool receiving member according to any one of claims 1 to 7, **characterised in that** the resilient pretensioning is brought about by means of two axially resilient resilient elements (41, 42) which are arranged, on the one hand, between the receiving member (20) and the radial partition wall (17) and, on the other hand, between the radial partition wall (17) and the anchor head (32).

9. Tool receiving member according to any one of claims 1 to 8, **characterised in that** mutually opposed end faces (10a, 20a) of the base member (10) and receiving member (20) are connected to each other in a positive-locking and/or non-positive-locking manner in order to transmit torque.

10. Tool receiving member according to any one of claims 1 to 9, **characterised by** a torsion damping which is provided between the base member (10) and receiving member (20).

11. Tool receiving member according to claim 9 or claim 10, **characterised by** at least one carrier (61, 62) which protrudes axially from the end face (10a, 20a) of one (10) of the two members (10, 20) and which engages in an axially movable manner in an opposing engagement opening (61a, 62a) in the other member (20).

12. Tool receiving member according to claim 11, **characterised in that** the at least one carrier (61, 62) engages in a fitting sleeve (61d, 62d) which is of a resilient polymer material and which is fitted in the engagement opening (61a, 62a) in the other member (20).

13. Tool receiving member according to claim 11 or claim 12, **characterised in that** the at least one carrier (61, 62) is secured to one member (10) by means of a fitting sleeve (61c, 62c) which is of a resilient polymer material and which is located in a receiving opening (61b, 62b).

14. Tool receiving member according to any one of claims 1 to 13, **characterised by** an internal cooling lubricant channel system which preferably extends centrally through the tool receiving member (1) for supplying a cooling lubricant which is supplied at the machine tool side to a tool (W) which is received in the receiving member (20).

15. Tool receiving member according to claim 14, **characterised by** a cooling lubricant transfer unit (50) having a cooling lubricant transmission pipe (52) which is received in an axial through-hole (33) of the anchor (30).

16. Tool receiving member according to claim 15, **characterised in that** the machine-tool-side end portion (52b) of the cooling lubricant transmission pipe (52) is retained by a closure element (54) which overlaps the anchor (30) at the machine tool side.

17. Tool receiving member according to claim 16, **characterised in that** the closure element (54) is screwed into a threaded hole (15a) which is accessible via the recess (15) of the base member (10).

18. Tool receiving member according to claim 16 or 17, **characterised in that** the closure element (54) has at the tool side an axial pipe projection (54b) which engages in the through-hole (33) of the anchor (30).

19. Tool receiving member according to any one of claims 1 to 18, **characterised in that** an end face (10a) of the sleeve portion (12) of the base member (10), which end face is directed towards the receiving member (20), has an axial annular projection (10b) which engages around a cylindrical projection (20b) of the end face (20b) of the receiving member (20), which end face is directed towards the base member (10), with a defined lateral play.

20. Tool receiving member according to claim 19, **characterised in that** there is arranged at an end-face annular face of the receiving member (20), which face is defined by the cylindrical projection (20b), an O-ring seal (27) on which the annular projection (10b) of the sleeve portion (12) of the base member (10) is axially supported.

## Revendications

1. Porte-outil comprenant un corps de base (10) et un corps de réception (20) relié au corps de base (10) aux fins de la transmission de couple de rotation et ancré de manière mobile axialement dans le corps de base (10) à l'aide d'une précontrainte de ressort, sachant que le corps de base (10) présente une section de tige (11) pourvue d'un évidement (15) ouvert côté machine-outil, de préférence centré, et une section de manchon (12) prolongeant axialement la section de tige (11), pourvue d'un alésage de guidage (16) ouvert côté machine-outil, de préférence centré, lequel alésage de guidage est séparé de l'évidement (15) de la section de tige (11) par une paroi de séparation (17) radiale, et sachant que le corps de réception (20) présente une section de guidage (22) guidée de manière mobile axialement dans l'alésage de guidage (16) de la section de manchon (12), de préférence cylindrique, **caractérisé en ce**
**que** le corps de réception (20) est ancré par l'intermédiaire d'un système d'ancrage (30) traversant un passage (18) axial dans la paroi de séparation (17) radiale et pouvant être actionné aux fins du réglage de la précontrainte de ressort sur l'évidement (15) du corps de base (10).

2. Porte-outil selon la revendication 1, **caractérisé en ce que** le système d'ancrage (30) présente une tige de système d'ancrage (31) prolongeant la section de guidage (22), traversant le passage (18) axial dans la paroi de séparation (17) radiale et une tête de système d'ancrage (32) prévue au niveau de la tige de système d'ancrage (31), appuyée au niveau du corps de base (10).

3. Porte-outil selon la revendication 2, **caractérisé en ce que** le système d'ancrage (30) est disposé de manière à pouvoir être déplacé axialement par rapport au corps de réception (20).

4. Porte-outil selon la revendication 2 ou 3, **caractérisé en ce que** la tête de système d'ancrage (32) est disposée de manière à pouvoir être déplacée axialement par rapport à la tige de système d'ancrage (31).

5. Porte-outil selon la revendication 3, **caractérisé en ce que** le système d'ancrage (30) est formé par une vis à tête vissée dans un alésage fileté (26c) axial de la section de guidage (22).

6. Porte-outil selon la revendication 4, **caractérisé en ce que** la tête de système d'ancrage (32) est formée par une vis à tête vissée dans un alésage fileté axial de la tige de système d'ancrage (31) ou par un écrou de système d'ancrage vissé sur une section de filetage extérieur de la tige de système d'ancrage (31).

7. Porte-outil selon les revendications 2 et 4 ou 2, 4 et 6, **caractérisé en ce que** la tige de système d'ancrage (31) est assemblée d'un seul tenant au niveau de la section de guidage (22) du corps de réception (20).

8. Porte-outil selon l'une quelconque des revendications 1 à 7, **caractérisé en ce que** la précontrainte de ressort est provoquée par deux éléments de ressort (41, 42) élastiques axialement, lesquels sont disposés d'une part entre le corps de réception (20) et la paroi de séparation (17) radiale et d'autre part entre la paroi de séparation (17) radiale et la tête de système d'ancrage (32).

9. Porte-outil selon l'une quelconque des revendications 1 à 8, **caractérisé en ce que** des côtés frontaux (10a, 20a) se faisant face les uns les autres du corps de base (10) et du corps de réception (20) sont reliés les uns aux autres par complémentarité de forme et/ou à force aux fins de la transmission du couple de rotation.

10. Porte-outil selon l'une quelconque des revendications 1 à 9, **caractérisé par** un système d'amortissement de torsion prévu entre le corps de base (10) et le corps de réception (20).

11. Porte-outil selon la revendication 9 ou 10, **caractérisé par** au moins un entraîneur (61, 62) faisant saillie axialement depuis le côté frontal (10a, 20a) d'un (10) des deux corps (10, 20), lequel s'engrène de manière mobile axialement au niveau de l'autre corps (20) dans une ouverture d'engrènement (61a, 62a) faisant face.

12. Porte-outil selon la revendication 11, **caractérisé en ce que** l'entraîneur (61, 62) au moins au nombre de un s'engrène dans une douille d'adaptation (61d, 62d) adaptée à l'autre corps (20) dans l'ouverture d'engrènement (61a, 62a), constituée d'un matériau polymère élastique.

13. Porte-outil selon la revendication 11 ou 12, **caractérisé en ce que** l'entraîneur (61, 62) au moins au nombre de un est fixé au niveau d'un corps (10) par l'intermédiaire d'une douille d'adaptation (61c, 62c), reposant dans une ouverture de réception (61b, 62b), constituée d'un matériau polymère élastique.

14. Porte-outil selon l'une quelconque des revendications 1 à 13, **caractérisé par** un système de canal pour lubrifiant de refroidissement intérieur, s'étendant de préférence de manière centrée à travers le porte-outil (1), servant à amener un lubrifiant de refroidissement amené côté machine-outil à un outil (W) reçu dans le corps de réception (20).

15. Porte-outil selon la revendication 14, **caractérisé par** une unité de transfert de lubrifiant de refroidissement (50) pourvue d'un tube de transfert de lubrifiant de refroidissement (52) reçu dans un alésage de passage (33) axial du système d'ancrage (30).

16. Porte-outil selon la revendication 15, **caractérisé en ce que** la section d'extrémité (52b) côté machine-outil du tuyau de transfert de lubrifiant de refroidissement (52) est maintenue par un élément de fermeture (54) superposé sur le système d'ancrage (30) côté machine-outil.

17. Porte-outil selon la revendication 16, **caractérisé en ce que** l'élément de fermeture (54) est vissé dans un alésage fileté (15a) accessible par l'intermédiaire de l'évidement (15) du corps de base (10).

18. Porte-outil selon la revendication 16 ou 17, **caractérisé en ce que** l'élément de fermeture (54) présente côté outil une partie faisant saillie tubulaire (54b) axiale, laquelle s'engrène dans l'alésage de passage (33) du système d'ancrage (30).

19. Porte-outil selon l'une quelconque des revendications 1 à 18, **caractérisé en ce qu'**un côté frontal (10a), tourné vers le corps de réception (20), de la section de manchon (12) du corps de base (10) présente une partie faisant saillie annulaire (10b) axiale, laquelle entoure avec un jeu latéral défini une partie faisant saillie (20b) cylindrique du côté frontal (20b), tourné vers le corps de base (10), du corps de réception (20).

20. Porte-outil selon la revendication 19, **caractérisé en ce qu'**est disposé sur une face annulaire côté frontal, définie par la partie faisant saillie (20b) cylindrique, du corps de réception (20) un joint torique (27), au niveau duquel s'appuie axialement la partie faisant saillie annulaire (10b) de la section de manchon (12) du corps de base (10).
